# FASCICULE DE BREVET EUROPEEN

(11) **EP 3 661 987 B1**
(45) Date de publication et mention de la délivrance du brevet: **14.10.2026**
(21) Numéro de dépôt: 18765946.1
(22) Date de dépôt: 27.07.2018
(51) Int. Cl.: C08F 220/14, C08J 5/18

(54) **COMPOSITION COMPRENANT UN COPOLYMERE COMPRENANT DES MONOMERES DE METHACRYLATE DE METHYLE, D'ACIDES (METH) ACRYLIQUE ET DE MONOMERES STYRÈNIQUES**
ZUSAMMENSETZUNG MIT EINEM COPOLYMER MIT METHYLMETHACRYLAT, (METH)ACRYLSÄURE UND STYROLMONOMEREN
COMPOSITION COMPRISING A COPOLYMER COMPRISING METHYL METHACRYLATE, (METH)ACRYLIC ACID AND STYRENE MONOMERS

(30) Priorité: 31.07.2017 FR 1757288
(43) Date de publication de la demande: 10.06.2020
(73) Titulaire: Trinseo Europe GmbH, 8808 Pfaeffikon (CH)
(72) Inventeur: LE CROM, Christophe, 64110 Jurançon (FR)
(74) Mandataire: SSM Sandmair
(86) Numéro de dépôt international: PCT/FR2018/051944
(87) Numéro de publication internationale: WO 2019/025709

(56) Documents cités:
- EP-A1- 0 774 471
- WO-A1-2004/036112
- US-A1- 2008 261 019

## Description

### [Domaine de l'invention]

La présente invention concerne une composition polymère comprenant un polymère comprenant des monomères de méthacrylate de méthyle, d'acides (méth)acrylique et de styrène.

En particulier, la présente invention concerne une composition polymère comprenant un polymère comprenant des monomères de méthacrylate de méthyle, d'acides (méth)acrylique et de styrène, la dite composition présentant des compromis particulièrement intéressant de résistance thermique, de fluidité, de résistance à la rayure et de résistance chimique.

La présente invention concerne également un objet moulé ou extrudé comprenant un polymère comprenant des monomères de méthacrylate de méthyle, d'acides (méth)acrylique et de styrène ainsi que l'utilisation de ces objets.

### [Problème technique]

Les polymères et copolymères thermoplastiques, notamment (méth)acryliques, ont d'excellentes caractéristiques de transparence, de bonnes propriétés mécaniques et d'usinage, et sont largement utilisés dans divers domaines, tels que les pièces automobiles, les pièces électriques, les pièces industrielles, les matériaux optiques, diverses pièces d'appareils électriques ménagers, les pièces esthétiques, les articles divers et analogues.

Il est très intéressant de disposer de compositions polymères à base de polymères (méth)acryliques qui ont des propriétés thermiques suffisantes dans ces domaines ou, en d'autres termes, une résistance à la chaleur ou une température de Vicat augmentée. Ceci peut être obtenu par copolymérisation avec des comonomères spécifiques.

Par ailleurs, il est également très intéressant de disposer d'une composition polymère présentant de meilleures propriétés optiques, de résistance thermique, de fluidité, de résistance à la rayure et de résistance chimique. L'ensemble de ces propriétés est toutefois difficile à obtenir de façon simultanée et généralement on obtient des compromis qui ne satisfaisant pas toujours les exigences nécessaires à certaines applications.

L'objectif de la présente invention est de proposer une composition polymère (méth)acrylique présentant une meilleure balance de propriétés.

Ainsi un des objectifs de l'invention est de proposer une composition dont la tenue thermique est améliorée, ayant une température de ramollissement Vicat supérieur à 110°C, préférablement supérieur à 111°C.

Un autre des objectifs de l'invention est de proposer une composition dont la fluidité est améliorée, ayant un indice de fluidité (MFI) compris entre 4,0 et 7 g/10 minutes.

Un autre des objectifs de l'invention est de proposer une composition dont la résistance à la rayure est améliorée.

Un autre des objectifs de l'invention est de proposer une composition dont la résistance chimique est améliorée.

Un autre objectif de la présente invention est de proposer un objet dont la résistance thermique, la résistance à la rayure et la résistance chimique sont améliorées.

### [ARRIERE-PLAN DE L'INVENTION] Art antérieur

De nombreux document décrivent des compositions de polymères comprenant des monomères méthacryliques et des monomères permettant d'améliorer certaines propriétés.

Le document US 6716951 décrit un procédé de production de polymères méthacrylique à résistance thermique améliorée comprenant des comonomères tels que l'alpha méthyl styrène, le styrène et l'anhydride maléique. l'alpha methyl styrène est un monomère peu disponible sur le marché donc présente un cout élevé, tandis que l'anhydride maléique pose des problèmes de manipulation du fait de sa toxicité.

Le document US 4558098 décrit une approche très similaire, ne limitant pas le monomère styrenique à l'alpha méthyl styrène en incluant tout la famille des composés vinyle aromatique.

Le document US 2007222117 décrit aussi une composition proche des deux précédentes avec également l'utilisation de l'anhydride maléique.

Le document US5612417 décrit une composition issue d'un mélange de deux polymères, l'un étant principalement constitué de méthacrylate de méthyle (supérieur à 80 %), l'autre étant constitué de méthacrylate de méthyle (29 à 70%), de styrène ou alpha méthyle styrène (30 à 70 %), et d'acides (méth) acrylique (1 à 20%). Si ce mélange présente des propriétés qui peuvent s'avérer intéressantes, il a le désavantage de nécessiter deux polymères, chacun à préparer de façon séparée, suivit d'une étape de mélange de ces deux polymères.

Une approche similaire est décrite dans EP 0537767 mettant en jeu 3 polymères.

Enfin, s'agissant de compositions moins élaborées, de nombreux documents décrivent des combinaisons des monomères tels que le méthacrylate de méthyle et l'acide méthacrylique (GB 478323, GB 531956, GB 698 193, GB 1437176, EP 0774471). Le document EP0774471A1 décrit un procédé de polymérisation de monomères acryliques tels que le méthacrylate de méthyle en présence de styrène et/ou d'acide méthacrylique afin d'améliorer les propriétés optiques et mécaniques. Le document EP0 774471 A1 décrit un exemple de copolymère comprenant, respectivement, 84%, 8% et 8% en poids des monomères méthacrylate de méthyle, de styrène et d'acide méthacrylique. La température de ramollissement est de 119 °C, mesurée par la méthode ISO 306 standard.

Si ces compositions permettent d'améliorer des propriétés telles que la tenue à la chaleur et la résistance à la rayure, l'indice de fluidité est fortement affecté et pénalise les conditions de moulage ou d'injection à la fusion.
US 2008/0261019 A1 décrit un composite fibres cellulosiques naturelles/ thermoplastiques, et notamment un agent de compatibilité de poids moléculaire élevé au sein de ce composite permettant d'obtenir à la fois une résistance en flexion élevée et un module élevé, ainsi qu'une réduction significative de l'absorption de l'eau. L'agent de compatibilité est de préférence un terpolymère comprenant : a) de 0,5 à 20 pour cent en poids d'unités monomères choisies parmi l'anhydride maléique, l'anhydride maléique substitué, le mono-ester d'anhydride maléique, l'anhydride itaconique, l'acide maléique, l'acide fumarique, l'acide crotonique, l'acide acrylique et l'acide méthacrylique ; b) de 0 à 40 pour cent en poids d'unités monomères choisies parmi le styrène et le styrène fonctionnalisé ; et c) de 40 à 98,5 pour cent en poids d'unités monomères choisies parmi les méthacrylates et les acrylates d'alkyle en C1-8 et l'acétate de vinyle.

### [Brève description de l'invention]

La demanderesse a découvert qu'une composition polymère appropriée pour la fabrication d'objets moulés ou injectés, le dit polymère comprenant des monomères choisis parmi le méthacrylate de méthyle dans des proportions massiques comprises entre 88% et90% , le styrène dans des proportions massiques comprises entre 5,5% et 8%, les acide acrylique et/ou méthacrylique dans des proportions comprises entre 3,5% et 5%%, la composition présentant un indice de fluidité compris entre 4.0 et 7 g/10 minutes, mesuré selon la norme ISO 1133-2:2011 (230 °C/3,8 kg), et une température de ramollissement Vicat comprise entre 110°C et 120°C mesuré à une charge de 50N selon la norme ISO 306:2013 méthode B50, permet d'obtenir uncopolymère (méth)acrylique présentant des propriétés optiques, de résistance thermique, de fluidité, de résistance à la rayure et de résistance chimique particulièrement optimales et adaptées à la fabrication d'objets moulés ou injectés. De plus, lorsque la composition est polymérisée selon un protocole dit « contrôlé », la balance des propriétés est améliorée. La dite composition présente un indice de fluidité compris entre 3.5 et 7 g/10 minutes et une température de ramollissement Vicat comprise entre 110°C et 120°C.

### [Description détaillée de l'invention]

Le terme « copolymère », tel qu'utilisé, désigne des polymères constitués d'au moins deux monomères différents. Dans le cadre de l'invention, on parlera indifféremment de polymère ou de copolymère.

Ainsi, le copolymère entrant dans la composition de l'invention comprend:
- du méthacrylate de méthyle dans des proportions massiques variant entre 88% et 90%.
- du styrène dans des proportions massiques variant entre 5,5% et 8% et avantageusement entre 6% et 8%.
- de l'acide méthacrylique et ou de l'acide acrylique dans des proportions massiques variant entre 3.5% et 5% et avantageusement entre 4% et 5%. Idéalement de l'acide méthacrylique dans des proportions variant de 4% et 4.9% comme défini en revendications.

Toutes les bornes de ces compositions étant incluses.

Le copolymère entrant dans la composition de l'invention est de façon préférée constitué de méthacrylate de méthyle dans des proportions massiques variant
entre 88% et 90% ; de styrène dans des proportions massiques variant
entre 5.5% et 8% et avantageusement entre 6% et 8%; et de l'acide méthacrylique et ou de l'acide acrylique dans des proportions massiques variant entre 3.5% et 5% et avantageusement entre 4% et 5%. Idéalement de l'acide méthacrylique dans des proportions variant de 4% et 5 %.

Le copolymère entrant dans la composition de l'invention présente un indice de fluidité (MFI) compris entre 4,0 et 7g/10 minutes, et de préférence entre 4 et 6,5 g/10 minutes, mesuré selon la norme ISO 1133-2:2011 (230 °C/3,8 kg).

Le copolymère entrant dans la composition de l'invention présente une température de ramollissement Vicat compris entre 110°C et 120°C, mesuré à une charge de 50N selon la norme ISO 306:2013 méthode B50.

**En ce qui concerne le procédé de** fabrication de la composition polymère selon l'invention, il comprend les étapes de :
a) préparation d'un mélange comprenant trois monomères
   a1) du méthacrylate de méthyle dans des proportions massiques variant
      entre 88% et 90%,
   a2) du styrène dans des proportions massiques variant
      entre 5,5% et 8% et avantageusement entre 6% et 8%,
   a3) de l'acide méthacrylique et ou de l'acide acrylique dans des proportions massiques variant
      entre 3.5% et 5% et avantageusement entre 4% et 5% et idéalement de l'acide méthacrylique dans des proportions variant de 4% et 4.9%,
   toutes les proportions étant relative à la somme des trois monomères a1), a2) et a3),
b) polymérisation du mélange obtenu à l'étape a).

S'agissant de la préparation des copolymères entrant dans la composition objet de l'invention, selon une première forme de l'invention, la polymérisation est conduite de façon radicalaire « classique » à l'aide d'un initiateur de type radical libre.

L'initiateur est de type azo, peroxyde ou hydroperoxyde.

Des exemples de l'initiateur radicalaire susmentionné comprennent les composés azo tels que l'azobisisobutyronitrile, l'azobisdiméthylvaléronitrile, l'azobiscyclohexanenitrile, le 1,1'-azobis(1-acétoxy-1-phényléthane), le 2,2'-azobisisobutyrate de diméthyle et l'acide 4,4'-azobis-4-cyanovalérique ; et les peroxydes organiques tels que le peroxyde de benzoyle, le peroxyde de lauroyle, le peroxyde d'acétyle, le peroxyde de caprylyle, le peroxyde de 2,4-dichlorobenzoyle, le peroxyde d'isobutyle, le peroxyde d'acétylcyclohexylsulfonyle, le peroxypivalate de tert-butyle, le peroxy-2-éthylhexanoate de tert-butyle, le 1,1-di-tert-butylperoxycyclohexane, le 1,1-di-tert-butylperoxy-3,3,5-triméthylcyclohexane, le 1,1-di-tert-hexylperoxy-3,3,5-triméthylcyclohexane, le peroxydicarbonate d'isopropyle, le peroxydicarbonate d'isobutyle, le peroxydicarbonate de sec-butyle, le peroxydicarbonate de n-butyle, le peroxydicarbonate de 2-éthylhexyle, le peroxydicarbonate de bis(4-tert-butylcyclohexyle), le peroxy-2-éthylhexanoate de tert-amyle, le peroxy-éthylhexanoate de 1,1,3,3-tétraméthylbutyle, le peroxy-2-éthylhexanoate de 1,1,2-triméthylpropyle, le peroxyisopropylmonocarbonate de tert-butyle, le peroxyisopropylmonocarbonate de tert-amyle, le peroxy-2-éthylhexylcarbonate de tert-butyle, le peroxyallylcarbonate de tert-butyle, le peroxyisopropylcarbonate de tert-butyle, le peroxyisopropylmonocarbonate de 1,1,3,3-tétraméthylbutyle, le peroxyisopropylmonocarbonate de 1,1,2-triméthylpropyle, le peroxyisononanoate de 1,1,3,3-tétraméthylbutyle, le peroxyisononanoate de 1,1,2-triméthylpropyle, le 1,1-bis(tert-amylperoxy)cyclohexane et le peroxybenzoate de tert-butyle. Ces initiateurs radicalaires peuvent être utilisés individuellement en un type ou peuvent être utilisés en un mélange de deux types ou plus de ceux-ci.

La quantité de l'initiateur radicalaire à utiliser n'est pas particulièrement limitée, et peut être de 0,001 pour cent en poids à 1 pour cent en poids par rapport au mélange de monomères.

En ce qui concerne l'agent de transfert de chaîne ou le régulateur de chaîne du procédé de fabrication de la composition selon l'invention, il s'agit d'un composé organique contenant du soufre, afin d'ajuster le poids moléculaire du polymère produit par le procédé.

L'agent de transfert de chaîne est choisi parmi les mercaptans.

L'agent de transfert de chaîne peut être un agent de transfert de chaîne monofonctionnel ou multifonctionnel, et des exemples spécifiques de ceux-ci, seuls ou en mélange comprennent les alkylmercaptans tels que le propylmercaptan, le butylmercaptan, l'hexylmercaptan, l'octylmercaptan, le 2-éthylhexylmercaptan et le dodécylmercaptan ; les mercaptans aromatiques tels que le phénylmercaptan et le thiocrésol ; les mercaptans ayant un nombre de carbones de 18 ou moins tels que l'éthylène thioglycol ; les alcools polyhydriques tels que l'éthylène glycol, le néopentylglycol, le triméthylolpropane, le pentaérythritol, le dipentaérythritol, le tripentaérythritol et le sorbitol ; les substances estérifiées d'un groupe hydroxyle avec de l'acide thioglycolique ou de l'acide 3-mercaptopropionique, le 1,4-dihydronaphtalène, le 1,4,5,8-tétrahydronaphtalène; le terpinène, le terpinolène, le 1,4-cyclohexadiène, le 1,4-cyclohexadiène et le sulfure d'hydrogène. Ceux-ci peuvent être utilisés sous la forme d'une substance simple ou en combinaison de deux types ou plus.

La quantité d'agent de transfert de chaîne n'est pas particulièrement limitée et varie selon le type d'agent de transfert de chaîne utilisé. Par exemple, dans le cas de l'utilisation de mercaptans en tant qu'agent de transfert de chaîne, la quantité est de préférence de 0,01 partie en poids à 3 parties en poids, de manière davantage préférée de 0,05 partie en poids à 1 partie en poids, par rapport à 100 parties en poids du mélange de monomères.

Selon une deuxième forme de l'invention, la polymérisation est conduite de façon radicalaire contrôlée.

Une des caractéristiques distinctive de la polymérisation radicalaire contrôlée (PRC) concerne la vitesse d'initiation correspondant aux espèces chimiques dormantes générant les espèces propageantes qui est bien plus rapide que la vitesse de propagation de polymérisation des chaines. Toutes les chaines sont donc initiées au début de la polymérisation et la propagation continue tant qu'il subsiste des monomères.

En polymérisation radicalaire « classique » non contrôlée, c'est l'inverse, la vitesse d'initiation est plus lente que la vitesse de propagation. Dans ce cas de nouvelles chaines sont créées tout au long de la polymérisation.

Ainsi, en PRC, la dispersité du polymère obtenu est plus faible, mais surtout en PRC toutes les chaines présentent la même composition en monomère, et ce quelques soient les rapports de réactivité des monomères. Ceci affecte favorablement le compromis de propriétés.

On pourra utiliser tout type de polymérisation radicalaire contrôlée dans le cadre de l'invention telle que la NMP ("Nitroxide Mediated Polymerization"), la RAFT ("Reversible Addition and Fragmentation Transfer"), l'ATRP ("Atom Transfer Radical Polymerization"), l'INIFERTER ("Initiator-Transfer-Termination"), la RITP (" Reverse Iodine Transfer Polymerization"), l'ITP ("Iodine Transfer Polymerization).

Selon une forme préférée de l'invention, les copolymères sont préparés par polymérisation contrôlée par les nitroxydes (NMP).

Plus particulièrement les nitroxydes issus des alcoxyamines dérivées du radical libre stable (1) sont préférées.

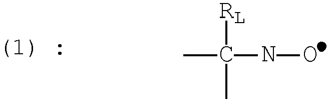

Dans laquelle le radical R_{L} présente une masse molaire supérieure à 15,0342 g/mole. Le radical R_{L} peut être un atome d'halogène tel que le chlore, le brome ou l'iode, un groupement hydrocarboné linéaire, ramifié ou cyclique, saturé ou insaturé tel qu'un radical alkyle ou phényle, ou un groupement ester -COOR ou un groupement alcoxyle -OR, ou un groupement phosphonate -PO(OR)₂, dès lors qu'il présente une masse molaire supérieure à 15,0342. Le radical R_{L}, monovalent, est dit en position β par rapport à l'atome d'azote du radical nitroxyde. Les valences restantes de l'atome de carbone et de l'atome d'azote dans la formule (1) peuvent être liées à des radicaux divers tels qu'un atome d'hydrogène, un radical hydrocarboné comme un radical alkyle, aryle ou aryle-alkyle, comprenant de 1 à 10 atomes de carbone. Il n'est pas exclu que l'atome de carbone et l'atome d'azote dans la formule (1) soient reliés entre eux par l'intermédiaire d'un radical bivalent, de façon à former un cycle. De préférence cependant, les valences restantes de l'atome de carbone et de l'atome d'azote de la formule (1) sont liées à des radicaux monovalents. De préférence, le radical R_{L} présente une masse molaire supérieure à 30 g/mole. Le radical R_{L} peut par exemple avoir une masse molaire comprise entre 40 et 450 g/mole. A titre d'exemple, le radical R_{L} peut être un radical comprenant un groupement phosphoryle, ledit radical R_{L} pouvant être représenté par la formule (2):

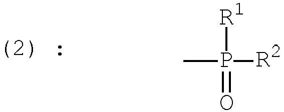

Dans laquelle R¹ et R², pouvant être identiques ou différents, peuvent être choisis parmi les radicaux alkyle, cycloalkyle, alkoxyle, aryloxyle, aryle, aralkyloxyle, perfluoroalkyle, aralkyle, et peuvent comprendre de 1 à 20 atomes de carbone. R¹ et/ou R² peuvent également être un atome d'halogène comme un atome de chlore ou de brome ou de fluor ou d'iode. Le radical R_{L} peut également comprendre au moins un cycle aromatique comme pour le radical phényle ou le radical naphtyle, ce dernier pouvant être substitué, par exemple par un radical alkyle comprenant de 1 à 4 atomes de carbone.

Plus particulièrement les alcoxyamines dérivées des radicaux stables suivants sont préférées :
- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphosphono-2,2-diméthyl propyl nitroxyde,
- N-phényl-1-diéthyl phosphono-2,2-diméthyl propyl nitroxyde,
- N-phényl-1-diéthyl phosphono-1-méthyl éthyl nitroxyde,
- N-(1-phényl 2-méthyl propyl)-1-diéthylphosphono-1-méthyl éthyl nitroxyde,
- 4-oxo-2,2,6,6-tétraméthyl-1-piperidinyloxy,
- 2,4,6-tri-tert-butylphenoxy nitroxyde.
- N-tertiobutyl-1-diéthylphosphono-2,2-diméthyl propyl nitroxyde.

Les alkoxyamines utilisées en polymérisation radicalaire contrôlée doivent permettre un bon contrôle de l'enchaînement des monomères. Ainsi elles ne permettent pas toutes un bon contrôle de certains monomères. Par exemples les alcoxyamines dérivées du TEMPO ne permettent de contrôler qu'un nombre limité de monomères, il en va de même pour les alcoxyamines dérivées du 2,2,5-tri-methyl-4-phenyl-3-azahexane-3-nitroxyde (TIPNO). En revanche d'autres alcoxyamines dérivées des nitroxydes répondant à la formule (1), particulièrement celles dérivées des nitroxydes répondant à la formule (2) et encore plus particulièrement celles dérivées du N-tertiobutyl-1-diéthylphosphono-2,2-diméthyl propyl nitroxyde permettent d'élargir à un grand nombre de monomère la polymérisation radicalaire contrôlée de ces monomères.

En outre la température d'ouverture des alcoxyamines influe également sur le facteur économique. L'utilisation de basses températures sera préférée pour minimiser les difficultés industrielles. On préfèrera donc les alkoxyamines dérivées des nitroxydes répondant à la formule (1), particulièrement celles dérivées des nitroxydes répondant à la formule (2) et encore plus particulièrement celles dérivées du N-tertiobutyl-1-diéthylphosphono-2,2-diméthyl propyl nitroxyde à celles dérivées du TEMPO ou 2,2,5-tri-methyl-4-phenyl-3-azahexane-3-nitroxyde (TIPNO).

Un agent stabilisateur thermique pour supprimer la décomposition thermique du copolymère (méth)acrylique peut être ajouté avec les autres matières premières, notamment le mélange de monomères, dans le procédé. De manière davantage préférée, la teneur en agent stabilisateur thermique est comprise entre 1 ppm et 2 000 ppm en poids par rapport à la quantité totale de la composition de copolymère méthacrylique finale obtenue par le procédé. Lorsque la composition de résine méthacrylique de la présente invention est soumise à un moulage par injection afin de la mouler en une plaque de guidage de la lumière tel que souhaité, une température de moulage est fixée à une température plus élevée dans le but d'augmenter une efficacité de moulage dans certains cas, et l'ajout de l'agent stabilisateur thermique dans ces cas contribue à un tel effet.

En ce qui concerne l'agent stabilisateur thermique, il n'y a pas de limitations spécifiques, mais un agent stabilisateur thermique à base de phosphore et un composé de disulfure organique sont mentionnés à titre d'exemple. Parmi eux, le composé de disulfure organique est préféré. En tant qu'agent stabilisateur thermique, un type ou plus d'un type de celui-ci peut être utilisé.

En tant qu'agent stabilisateur thermique à base de phosphore décrit précédemment, des exemples sont le tris(2,4-di-t-butylphényl)phosphite, la 2-[[2,4,8,10-tétrakis(1,1-diméthyléthyl)dibenzo[d,f][1,3,2]dioxaphosphépine-6-yl]oxy]-N,N-bis[2-[[2,4,8,10-tétrakis(1,1-diméthyléthyl)dibenzo[d,f][1,3,2]dioxaphosphépine-6-yl]oxy]-éthyl]éthanamine, le diphényltridécylphosphite, le triphénylphosphite, le 2,2-méthylènebis(4,6-di-tert-butylphényl)octylphosphite, le diphosphite de bis(2,6-di-tert-butyl-4-méthylphényl)pentaérythritol, etc. Parmi eux, le 2,2-méthylènebis(4,6-di-tert-butylphényl)octylphosphite est préféré.

En tant que composé de disulfure organique décrit précédemment, des exemples sont le disulfure de diméthyle, le disulfure de diéthyle, le disulfure de di-n-propyle, le disulfure de di-n-butyle, le disulfure de di-sec-butyle, le disulfure de di-tert-butyle, le disulfure de di-tert-amyle, le disulfure de dicyclohexyle, le disulfure de di-tert-octyle, le disulfure de di-n-dodécyle, le disulfure de di-tert-dodécyle, etc. Parmi eux, le disulfure de di-tert-alkyle est préféré, et le disulfure de di-tert-dodécyle est davantage préféré.

Généralement, la polymérisation est réalisée en absence de tout solvant ou dispersant ajouté volontairement. Les monomères liquides du mélange de monomères ne sont pas considérés comme des solvants ou dispersants ajoutés. Lorsque la polymérisation voit la conversion en monomères incomplète, ceux-ci pourront être éliminés par évaporation dans un dispositif adapté.

Selon un autre aspect, la présente invention concerne l'utilisation de la composition pour la fabrication d'un objet moulé ou extrudé.

Selon un autre aspect, la présente invention concerne un procédé de fabrication d'un objet moulé ou extrudé par transformation d'une composition polymère obtenue par le procédé de préparation d'une composition polymère appropriée pour la fabrication d'objets moulés ou extrudés.

La transformation peut être réalisée par moulage par injection, extrusion, coextrusion ou moulage par extrusion/soufflage. De préférence, la transformation est réalisée par injection ou extrusion, et de manière davantage préférée par moulage par injection.

Le procédé de fabrication d'un objet moulé selon l'invention comprend les étapes suivantes :
- la fusion de la composition comprenant un copolymère (méth)acrylique produite par le procédé de la présente invention,
- l'injection de la composition fondue dans un moule,
- l'application d'une pression sur le moule au moins jusqu'à ce que le moule soit complètement rempli avec la composition fondue.

Selon un autre aspect, la présente invention concerne l'utilisation de la composition pour la fabrication d'un objet moulé, ladite composition polymère étant obtenue par le procédé de préparation d'une composition polymère appropriée pour la fabrication d'objets ou d'articles moulés.

La composition polymère produite par le procédé de la présente invention est de préférence utilisée en tant que matériau pour un article moulé, et l'article moulé obtenu à partir de celle-ci, a l'avantage de présenter une résistance à la chaleur élevée et une stabilité thermique élevée. Par exemple, la composition polymère produite par le procédé de la présente invention (plus spécifiquement, la composition de copolymère méthacrylique après dégagement des matières volatiles) est moulée seule ou conjointement avec un ou plusieurs autres composants quelconques appropriés selon un procédé de moulage quelconque, tel que le moulage par injection et le moulage par extrusion pour préparer un article moulé.

La composition selon l'invention peut être transformée par moulage par injection, extrusion, co-extrusion ou moulage par extrusion/soufflage pour la préparation de parties, d'éléments profilés, de feuilles ou de films, par exemple, ou pour la production d'un objet ou d'un article moulé.

La composition obtenue par le procédé selon l'invention peut être utilisée pour la fabrication d'un article ou être utilisée pour faire partie d'un article.

La composition obtenue par le procédé selon l'invention peut être utilisée pour être transformée directement en un article ou un objet ou peut faire partie d'un article ou d'un objet.

Selon un autre aspect, la présente invention concerne un objet moulé ou extrudé fabriqué en une composition polymère obtenue par un procédé selon la présente invention.

L'objet moulé ou extrudé de l'invention peut être sous la forme d'une feuille, d'un bloc, d'un film, d'un tube ou d'un élément profilé.

Des exemples d'objets ou d'articles moulés ou extrudés sont les guides de lumière, les lentilles, les pièces décoratives d'automobiles, les pièces de phares automobiles avant et arrière, feu arrière, les capots de lampes, fenêtres de tableau de bord, les agrégats, les façades de fours, les pièces d'appareils ménagers, les films optiques, les films décoratifs, les couches supérieures de protection de structures multicouches coextrudées.

### [Exemples]

La série d'exemples concerne la préparation de copolymères de différentes compositions.

Exemple 1 : Un copolymère COPO1 est préparé par polymérisation en suspension selon le document EP0774471 exemple 4, en utilisant un mélange comprenant 95,5 % en poids de méthacrylate de méthyle, 4,5 % en poids d'acide méthacrylique, les deux monomères représentant ensemble 100 parties en poids, et 0,26 partie en poids d'un régulateur de chaîne, 0,005 partie en poids de DTDDS et, en tant que dernier ingrédient, 0,225 partie en poids de peroxy-2-éthylhexanoate de t-butyle (Luperox^{®} 26 d'ARKEMA).

Exemple 2 : Un copolymère COPO2 est préparé par polymérisation en suspension selon le document EP0774471 exemple 4, en utilisant un mélange comprenant 88,5 % en poids de méthacrylate de méthyle (MMA), 4,5 % en poids d'acide méthacrylique (AMA), et 7% de styrène (STY), les trois monomères représentant ensemble 100 parties en poids, et 0,26 partie en poids d'un régulateur de chaîne, 0,005 partie en poids de DTDDS et, en tant que dernier ingrédient, 0,225 partie en poids de peroxy-2-éthylhexanoate de t-butyle (Luperox^{®} 26 d'ARKEMA).

**Tableau 1 - comparaison des propriétés de fluidité et de Vicat des compositions COPO 1 (comparative) et COPO 2 (selon l'invention)**

| | MMA | STY | AMA | MFI (g/10min) | Vicat °C |
|---|---|---|---|---|---|
| COPO1 | 95,5 | 0 | 4,5 | 2 | 121 |
| COPO2 | 88,5 | 7 | 4,5 | 5,2 | 117 |

Si on note une légère baisse du Vicat par la présence de styrène sur le COPO2, en revanche l'indice de fluidité est fortement augmenté ce qui représente un avantage particulièrement intéressant lors du moulage de pièces complexes.

## Revendications

1. Composition polymère appropriée pour la fabrication d'objets moulés ou injectés ou extrudés, le dit polymère comprenant des monomères choisis parmi le méthacrylate de méthyle dans des proportions massiques comprises entre 88% et 90%, le styrène dans des proportions massiques comprises entre 5,5% et 8%, les acide acrylique et/ou méthacrylique dans des proportions comprises entre 3,5% et 5%, la composition présentant un indice de fluidité compris entre 4,0 et 7 g/10 minutes, mesuré selon la norme ISO 1133-2:2011 (230 °C/3,8 kg), et une température de ramollissement Vicat comprise entre 110°C et 120°C mesuré à une charge de 50N selon la norme ISO 306:2013 méthode B50.

2. Composition selon la revendication 1, préparée par polymérisation radicalaire.

3. Composition selon la revendication 1, préparée par polymérisation radicalaire contrôlée.

4. Procédé de préparation d'une composition polymère selon l'une quelconque des revendications 1 à 3, comprenant les étapes de:
a) préparation d'un mélange comprenant trois monomères
a1) du méthacrylate de méthyle dans des proportions massiques variant entre 88% et 90%,
a2) du styrène dans des proportions massiques variant entre 5,5% et 8% et avantageusement entre 6% et 8 %,
a3) de l'acide méthacrylique et ou de l'acide acrylique dans des proportions massiques variant entre 3.5% et 5% et avantageusement entre 4% et 5% et idéalement de l'acide méthacrylique dans des proportions variant de 4% et 4.9%,
toutes les proportions étant relative à la somme des trois monomères a1), a2 ) et a3),
polymérisation du mélange obtenu à l'étape a).

5. Procédé selon la revendication 4, **caractérisé en ce que** la polymérisation est conduite de façon radicalaire.

6. Procédé selon la revendication 4, **caractérisé en ce que** polymérisation est conduite de façon radicalaire contrôlée.

7. Objet moulé ou extrudé fabriqué à partir d'une composition selon l'une quelconque des revendications 1 à 3.

8. Objet selon la revendication 7 sous la forme d'une feuille, d'un bloc, d'un film, d'un tube ou d'un élément profilé.

9. Objet selon l'une quelconque des revendications 7 ou 8, choisi parmi les guides de lumière, les lentilles, les pièces décoratives d'automobiles, les pièces de phares automobiles avant et arrière, feu arrière, les capots de lampes , fenêtres de tableau de bord, les agrégats, les façades de fours, les pièces d'appareils ménagers, les films optiques, les films décoratifs, les couches supérieures de protection de structures multicouches coextrudées.

## Patentansprüche

1. Polymerzusammensetzung, die zur Herstellung von Form-, Spritzguss- oder Extrusionsteilen geeignet ist, wobei das Polymer Monomere umfasst, die aus Methylmethacrylat in Massenanteilen zwischen 88 % und 90 %, Styrol in Massenanteilen zwischen 5,5 % und 8 %, Acrylsäure und/oder Methacrylsäure in Anteilen zwischen 3,5 % und 5 % ausgewählt sind; wobei die Zusammensetzung einen Schmelzindex zwischen 4,0 und 7 g/10 Minuten aufweist, gemessen gemäß der Norm ISO 1133-2:2011 (230 °C/3,8 kg), und eine Vicat-Erweichungstemperatur zwischen 110 °C und 120 °C, gemessen bei einer Belastung von 50 N gemäß der Norm ISO 306:2013, Methode B50.

2. Zusammensetzung nach Anspruch 1, hergestellt durch radikalische Polymerisation.

3. Zusammensetzung nach Anspruch 1, hergestellt durch kontrollierte radikalische Polymerisation.

4. Verfahren zur Herstellung einer Polymerzusammensetzung gemäß einem der Ansprüche 1 bis 3, umfassend die folgenden Schritte:
a) Herstellung einer Mischung, die drei Monomere umfasst:
a1) Methylmethacrylat in Massenanteilen zwischen 88 % und 90 %,
a2) Styrol in Massenanteilen zwischen 5,5 % und 8 % und vorzugsweise zwischen 6 % und 8 %,
a3) Methacrylsäure und/oder Acrylsäure in Massenanteilen zwischen 3,5 % und 5 % und vorzugsweise zwischen 4 % und 5 % sowie idealerweise Methacrylsäure in Anteilen zwischen 4 % und 4,9 %,
wobei sich alle Anteile auf die Summe der drei Monomere a1), a2) und a3) beziehen,
Polymerisation des in Schritt a) erhaltenen Gemisches.

5. Verfahren nach Anspruch 4, **dadurch gekennzeichnet, dass** die Polymerisation radikalisch durchgeführt wird.

6. Verfahren nach Anspruch 4, **dadurch gekennzeichnet, dass** die Polymerisation kontrolliert radikalisch durchgeführt wird.

7. Form- oder Extrusionskörper, hergestellt aus einer Zusammensetzung gemäß einem der Ansprüche 1 bis 3.

8. Gegenstand nach Anspruch 7 in Form einer Platte, eines Blocks, einer Folie, eines Rohrs oder eines Profilelements.

9. Gegenstand nach einem der Ansprüche 7 oder 8, ausgewählt aus Lichtleitern, Linsen, Zierteilen für Kraftfahrzeuge, Teilen für vordere und hintere Fahrzeugscheinwerfer, Rückleuchten, Lampenabdeckungen, Armaturenbrettscheiben, Aggregate, Ofenfronten, Teile von Haushaltsgeräten, optische Folien, Dekorfolien sowie oberste Schutzschichten von coextrudierten Mehrschichtstrukturen.

## Claims

1. A polymer composition suitable for the manufacture of moulded or injection-moulded or extruded objects, said polymer comprising monomers chosen from methyl methacrylate in weight proportions of between 88% and 90%, styrene in weight proportions of between 5.5% and 8%, and acrylic and/or methacrylic acids in proportions of between 3.5% and 5%, the composition having a melt flow index of between 4.0 and 7 g/10 minutes measured according to the standard ISO 1133-2:2011 (230 °C/3.8 kg) and a Vicat softening temperature of between 110 °C and 120 °C measured at a load of 50N according to the standard ISO 306:2013 method B50.

2. The composition according to claim 1, prepared by radical polymerisation.

3. The composition according to claim 1, prepared by controlled radical polymerisation.

4. A process for preparing a polymer composition according to any one of claims 1 to 3, comprising the steps of:
a) preparing a mixture comprising three monomers
a1) of methyl methacrylate in weight proportions varying from 88% to 90%,
a2) of styrene in weight proportions varying from 5.5% to 8% and advantageously from 6% to 8% and
a3) of methacrylic acid and/or acrylic acid in weight proportions varying from 3.5% to 5% and advantageously from 4% to 5% and ideally of methacrylic acid in proportions varying from 4% to 4.9%,
all the proportions being relative to the sum of the three monomers a1), a2) and a3); and
b) polymerising the mixture obtained in step a).

5. The process according to claim 4, **characterised in that** the polymerisation is carried out in a radical manner.

6. The process according to claim 4, **characterised in that** the polymerisation is carried out in a controlled radical manner.

7. A moulded or extruded object manufactured from a composition according to any one of claims 1 to 3.

8. The object according to claim 7, in the form of a sheet, a block, a film, a tube or a profiled element.

9. The object according to any one of claims 7 and 8, chosen from light guides, lenses, decorative motor vehicle parts, front and rear motor vehicle headlamp parts, rear lights, lamp covers, dashboard windows, aggregates, oven façades, household appliance parts, optical films, decorative films and upper protective layers of coextruded multilayer structures.
